# EUROPÄISCHE PATENTANMELDUNG

(11) **EP 3 133 215 A1**
(43) Veröffentlichungstag der Anmeldung: **22.02.2017**
(21) Anmeldenummer: 16155883.8
(22) Anmeldetag: 16.02.2016
(51) Int. Cl.: E03C 1/04

(54) **ARMATUR MIT SCHNELLBEFESTIGUNGSVORRICHTUNG**

(30) Priorität: 20.08.2015 DE 102015215865
(71) Anmelder: Franke Technology and Trademark Ltd, 6052 Hergiswil (CH)
(72) Erfinder: BOMATTER, Christian W., 68960 Willer (FR)
(74) Vertreter: Lemcke, Brommer & Partner Patentanwälte Partnerschaft mbB

(57) **Zusammenfassung**

Eine Armatur umfasst ein Armaturengehäuse 11, eine in einem Hahnloch 10' eines Armaturenträgers 10 befestigbare rohrförmige Befestigungsvorrichtung 1 und eine oder mehrere durch die rohrförmige Befestigungsvorrichtung zu dem Armaturengehäuse verlaufende flexible Anschlussleitungen 12. Die rohrförmige Befestigungsvorrichtung weist einen in das Hahnloch einführbaren Rohrabschnitt 2, einen auf den Armaturenträger auflegbaren Kragen 3 sowie einen über den Kragen hinausweisen ringförmigen Bund 4 auf, auf dem das Armaturengehäuse befestigbar ist. Seitlich an dem Rohrabschnitt sind mindestens zwei ausschwenkbare, längsverstellbare Halteklammern 5 angeordnet, die über innerhalb der rohrförmigen Befestigungsvorrichtung verlaufene Spannschrauben 6 gegen die Unterseite des Armaturenträgers verstellbar sind. Die Spannschrauben sind von der Armaturenseite der Befestigungsvorrichtung betätigbar und die Halteklammern sind in einer Montagestellung in Aussparungen der Befestigungsvorrichtung aufgenommen, aus denen sie bei Betätigung der Spannschrauben in eine Haltestellung ausschwenken. Das Armaturengehäuse weist befestigungsseitig eine Aufnahmebuchse 13 zur passgenauen, drehfesten Aufnahme des ringförmigen Bundes der rohrförmigen Befestigungsvorrichtung auf. Außerdem ist die Armatur in vormontiertem Zustand auf den Armaturenträger montierbar, indem das Armaturengehäuse mit den daran angeschlossenen und durch die rohrförmige Befestigungsvorrichtung geführten Anschlussleitungen von der in das Hahnloch eingeführten rohrförmigen Befestigungsvorrichtung soweit abnehmbar ist, dass die Spannschrauben zugänglich sind.

## Beschreibung

Die vorliegende Erfindung betrifft eine Armatur nach dem Oberbegriff des Anspruchs 1 mit einem Armaturengehäuse, einer in einem Hahnloch eines Armaturenträgers befestigbaren rohrförmigen Befestigungsvorrichtung und einer oder mehrerer durch die rohrförmige Befestigungsvorrichtung zu dem Armaturengehäuse verlaufenden flexiblen Anschlussleitungen.

Armaturen wie Sanitärarmaturen oder Spültischarmaturen werden üblicherweise montiert, indem die Armatur von Oben auf ein Hahnloch eines Armaturenträgeres, also beispielsweise eines Handwaschbeckens, einer Spüle oder einer Arbeitsplatte, aufgesetzt und dann von unten mit einer entsprechenden ring- oder hufeisenförmigen Befestigungsplatte gegen den Armaturenträger verschraubt werden. Diese Art der Montage hat sich jedoch als aufwändig und schwierig erwiesen, da für einen Monteur unter dem Armaturenträger häufig wenig Platz als Arbeitsraum zur Verfügung steht.

Daher wurden Schnellbefestigungsvorrichtungen für Armaturen vorgeschlagen, die von oben in ein Hahnloch eines Armaturenträgers einführbar sind und mindestens zwei seitlich ausschwenkbare, längsverstellbare Halteklammern aufweisen, die über innerhalb der Befestigungsvorrichtung verlaufene Spannschrauben gegen die Unterseite des Armaturenträgers verstellbar sind. Die Spannschrauben selbst sind hierbei von der Armaturenseite der Befestigungsvorrichtung her betätigbar, so dass die Befestigungsvorrichtung im Hahnloch des Armaturenträgers befestigbar ist, ohne dass Arbeiten unterhalb des Armaturenträgers ausgeführt werden müssen. Das Armaturengehäuse wird anschließend auf der Befestigungsvorrichtung befestigt.

Eine solche Schnellbefestigungsvorrichtung für eine Armatur ist beispielsweise aus der japanischen Schrift JP2002146862 bekannt. Das Armaturengehäuse wird hierbei auf einen oberen Bund der Befestigungsvorrichtung aufgesetzt. Ein Schraubenloch in dem Bund dient anschließend zur drehinvarianten Festlegung der Armatur. Die Anschlussleitungen werden erst nach Installation der Schnellbefestigungsvorrichtung durch die Rohröffnung hindurchgeführt. Hierbei kann es wegen der zum Anschluss an wandseitige Eckventile erforderlichen sperrigen Anschlussmuffen mit Überwurfmutter schwierig oder unmöglich sein, diese von oben durch die Befestigungsvorrichtung zu schieben, so dass eine Installation von unten erforderlich ist.

Eine ähnliche Befestigungsvorrichtung ist auch in der Schrift DE202012104488 gezeigt. Die dort gezeigte Armatur wird mit einer Art Bajonettverschluss auf der Befestigungsvorrichtung befestigt, muss also im richtigen Winkel aufgesteckt und anschließend durch eine Drehbewegung des Armaturengehäuses auf der Befestigungsvorrichtung arretiert werden. Da innerhalb der Befestigungsvorrichtung nur relativ wenig Platz für die Anschlussleitungen zur Verfügung steht und außerdem Anschlussleitungen und ein Auszugsschlauch für eine Auszugsbrause in getrennten Kanälen durch die Befestigungsvorrichtung laufen, ist eine solche Drehbewegung nur möglich, wenn die Anschlussleitungen noch nicht montiert sind. Somit müssen die Anschlussleitungen von unten an die bereits montierte Armatur angeschlossen werden, was wiederum Arbeiten unterhalb des Armaturenträgers erfordert.

Eine weitere Schnellbefestigungsvorrichtung ist in der Schrift US 2013/048100 gezeigt. Dort wird das Armaturengehäuse über ein zusätzliches Kunststoffformteil, welches mit mehreren Fingern an einer Ringnut im Bund der Befestigungsvorrichtung verrastet, auf der Befestigungsvorrichtung montiert. Die Anschlussleitungen müssen seitlich durch das Kunststoffformteil zu einem Mischventil geführt werden. Eine solche mehrteilige Befestigungsvorrichtung ist aufwendig in der Herstellung und die Handhabung bei der Montage ist schwierig und zeitaufwändig.

Eine Aufgabe der Erfindung besteht darin, eine Armatur anzugeben, die schnell und einfach montiert werden kann.

Die Aufgabe wird gelöst durch die Merkmale des Anspruchs 1. Vorteilhafte Ausgestaltungen sind den abhängigen Ansprüchen zu entnehmen.

Bei einer gattungsgemäßen Armatur wird die Aufgabe erfindungsgemäß dadurch gelöst, dass das Armaturengehäuse befestigungsseitig eine Aufnahmebuchse zur passgenauen, drehfesten Aufnahme des ringförmigen Bundes der rohrförmigen Befestigungsvorrichtung aufweist und dass die Armatur in vormontiertem Zustand auf den Armaturenträger montierbar ist, indem das Armaturengehäuse mit den daran angeschlossenen und durch die rohrförmige Befestigungsvorrichtung geführten Anschlussleitungen von der in das Hahnloch eingeführten rohrförmigen Befestigungsvorrichtung soweit abnehmbar ist, dass die Spannschrauben zugänglich sind.

Die vorliegende Erfindung schafft somit eine Armatur mit Schnellbefestigungsvorrichtung, die in dem vormontierten Zustand, also mit bereits am Armaturengehäuse angeschlossenen und durch die rohrförmige Befestigungsvorrichtung geführten Anschlussleitungen, installiert werden kann. Dies wird vor allem dadurch erreicht, dass das Armaturengehäuse auf die Befestigungsvorrichtung in einer definierten Orientierung zueinander lediglich aufgesteckt wird. Hierzu sind der Bund, der den oberen Abschluss der Befestigungsvorrichtung bildet, und das untere Ende des Armaturengehäuses, das in Form einer Aufnahmebuchse für den Bund ausgebildet ist, so ausgestaltet, dass sie eine zueinander drehfeste Passung bilden.

Die Armatur wird somit im vormontierten Zustand geliefert und das befestigungsseitige Ende der Befestigungsvorrichtung braucht lediglich in das Hahnloch der Trägerplatte eingeführt zu werden. Das Armaturengehäuse kann dann soweit von der Befestigungsvorrichtung abgenommen werden, dass die Spannschrauben zugänglich sind, mit denen die Halteklammern gegen die Unterseite der Trägerplatte verspannt werden. Anschließend kann das Armaturengehäuse wieder in der vorgegebenen Orientierung auf die Befestigungsvorrichtung aufgesteckt werden, wobei die Passung zwischen Bund und Aufnahmebuchse für ausreichend Halt und Stabilität der Befestigung sorgt. Da bei oder nach dem Aufsetzen des Armaturengehäuses auf die Befestigungsvorrichtung eine relative Verdrehung der beiden zueinander nicht erforderlich und auch nicht möglich ist, sind die vormontierten Anschlussleitungen hierbei nicht im Weg und können beim Aufsetzen problemlos durch den Innenraum der Befestigungsvorrichtung hindurchgleiten.

Aufgrund der drehfesten Steckverbindung zwischen Armaturengehäuse und Befestigungsvorrichtung kann die Armatur trotz der beengten Platzverhältnisse im Innenraum der Befestigungsvorrichtung als Brausearmatur ausgebildet sein, die einen Auslauf mit Auszugsbrause aufweist, welche über einen direkt durch das Armaturengehäuse verlaufenden Auszugsschlauch an das Armaturengehäuse angeschlossen ist. Der Auszugsschlauch verläuft hierbei durch die rohrförmige Befestigungsvorrichtung hindurch und in einer Schlaufe zurück zu einem am unteren Ende des Armaturengehäuses befindlichen Anschluss. Im Innenraum hat somit neben den Anschlussleitungen auch der doppelte, nämlich in Hin- und Rückrichtung durchgeführte Auszugsschlauch ausreichend Platz. Auch bei dieser Ausführungsform wird die Armatur im vormontierten Zustand, also mit angeschlossenen Anschlussleitungen sowie angeschlossenem Auszugsschlauch geliefert und installiert.

Die drehfeste Passverbindung zwischen Armaturengehäuse und Befestigungsvorrichtung kann vorzugsweise derart erfolgen, dass der Bund der Befestigungsvorrichtung eine Nut und das Armaturengehäuse einen innerhalb der Aufnahmebuchse angeordneten, korrespondierten Vorsprung aufweisen. Die Nut verläuft hierbei vorzugsweise parallel zu der Achsrichtung der rohrförmigen Befestigungsvorrichtung.

Die passgenaue, spielfreie Verbindung zwischen Armaturengehäuse und Befestigungsvorrichtung verleiht der Armatur an sich ausreichend Halt und Stabilität gegenüber dem Armaturenträger, da die Armatur lediglich in zum Armaturenträger senkrechter Richtung von der Befestigungsvorrichtung abgenommen werden könnte, in der jedoch im normalen Betrieb der Armatur kaum Kräfte auftreten. Zusätzlich kann am Armaturengehäuse im Bereich der Aufnahmebuchse eine Sicherungsschraube zur Festlegung des auf dem Bund aufgesteckten Armaturengehäuses vorgesehen sein. Somit wird ein versehentliches Abziehen des Armaturengehäuses von der Befestigungsvorrichtung verhindert. Vorzugsweise verläuft die Sicherungsschraube durch den Vorsprung innerhalb der Aufnahmebuchse. Aufgrund der durch den Vorsprung an dieser Stelle vergrößerten Wandstärke kann hier besonders gut ein Gewinde eingeschnitten werden, das der Sicherungsschraube, vorzugsweise einer kopflosen Madenschraube, ausreichend Halt verleiht.

Zweckmäßigerweise sind die Aufnahmebuchse und der Bund derart zusammenwirkend ausgebildet, dass das Armaturengehäuse in einer rein axialen Richtung bezogen auf die rohrförmige Festlegungsvorrichtung auf den Bund aufsteckbar ist.

Aufgrund der drehfesten Verbindung zwischen Befestigungsvorrichtung und Armaturengehäuse ergibt sich die zusätzliche Schwierigkeit, dass die Befestigungsvorrichtung vor dem Verspannen der Halteklammern in der korrekten Position zum Armaturenträger ausgerichtet werden muss, sodass der Auslauf der Armatur später in die richtige Richtung weist. Gemäß einer bevorzugten Ausführungsform der vorliegenden Erfindung wird dies dadurch erreicht, dass der Kragen der Befestigungsvorrichtung an einer Seite einen gerade ausgeformten Randbereich aufweist, der als Ausrichtmarke zur optischen Ausrichtung der Befestigungsvorrichtung gegenüber dem Armaturenträger dienen kann. Der gerade ausgeformte Randbereich kann beispielsweise den hinteren Bereich der Armatur repräsentieren, sodass er optisch leicht gegenüber einer Wand oder einer rückwärtigen Begrenzung des Armaturenträgers, wie etwa dem Rand einer Spüle, ausgerichtet werden kann. Die Befestigungsvorrichtung kann somit in korrekter Orientierung installiert werden, ohne dass hierzu das Armaturengehäuse aufgesteckt sein müsste.

Vorzugsweise ist in dem Armaturengehäuse ein Mischventil untergebracht, beispielsweise ein keramisches Scheibenventil eines Einhebelmischers, und die Anschlussleitungen umfassen eine Warmwasser- sowie eine Kaltwasserleitung.

Weitere Vorteile und Eigenschaften der Erfindung ergeben sich anhand der Ausführungsbeispiele und der beigefügten Zeichnungen. Hierbei zeigen:
- Figur 1: einer Schnellbefestigungsvorrichtung für eine erfindungsgemäße Armatur in einer Seitenansicht,
- Figur 2: eine Draufsicht auf die Befestigungsvorrichtung aus Figur 1,
- Figur 3: die Schnellbefestigungsvorrichtung aus Figur 1 in einem Armaturenträger montiert,
- Figur 4: eine erfindungsgemäße Armatur beim Einführen der Befestigungsvorrichtung in ein Hahnloch eines Armaturenträgers,
- Figur 5: die Armatur aus Figur 3 mit in das Hahnloch eingeführter Befestigungsvorrichtung,
- Figur 6: das Verschrauben der Befestigungsvorrichtung aus Figur 4 im Hahnloch,
- Figuren 7a und 7b: das Verschrauben der Befestigungsvorrichtung im Hahnloch in einer Ansicht von schräg unten,
- Figur 8: das Aufstecken der Armatur auf die im Hahnloch verschraubte Befestigungsvorrichtung,
- Figur 9: eine Detailansicht des unteren Endes des Armaturengehäuses mit der Aufnahmebuchse für den Bund der Befestigungsvorrichtung,

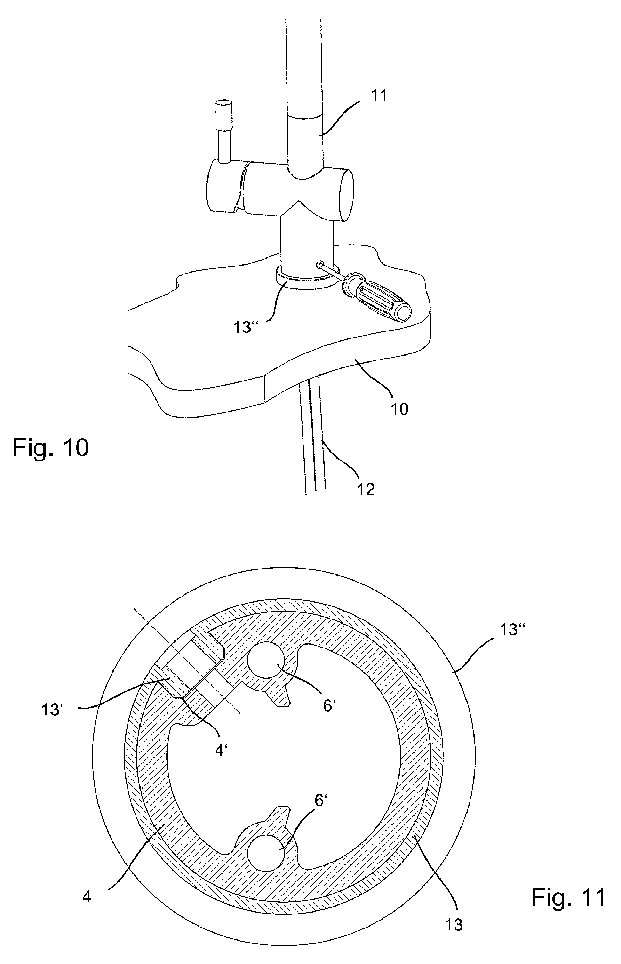

- Figur 10: das Festschrauben des auf die Befestigungsvorrichtung aufgesteckten Armaturengehäuses mithilfe einer Sicherungsschraube,
- Figur 11: einen Schnitt durch Armaturengehäuse und Befestigungsvorrichtung in einer radialen Ebene auf Höhe der Befestigungsschraube.

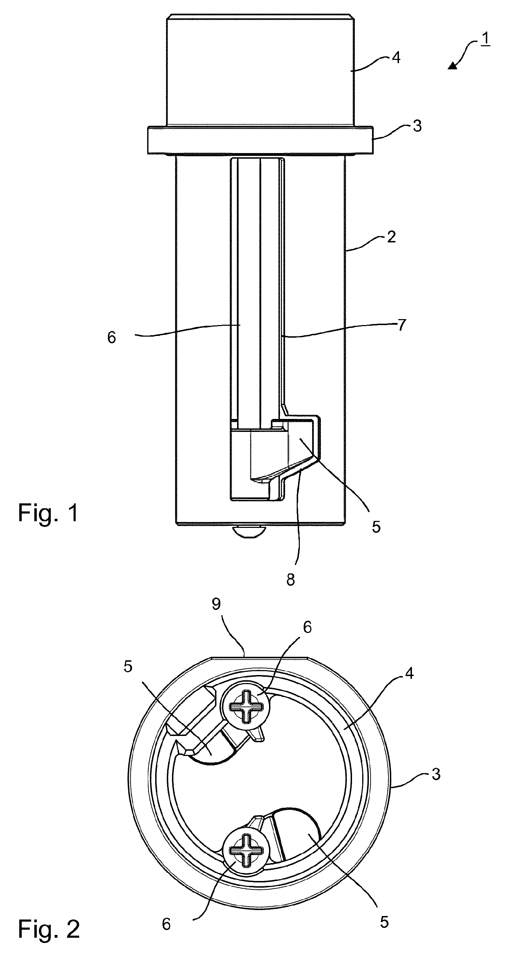

In den Figuren 1 bis 3 ist eine Schnellbefestigungsvorrichtung zur Verwendung mit einer erfindungsgemäßen Armatur gezeigt. Es handelt sich um ein rohrförmiges Befestigungsbauteil 2, welches im oberen Bereich einen Kragen 3 und einen sich daran anschließenden ringförmigen Bund 4 aufweist. Seitlich an dem Rohrabschnitt 2 befinden sich zwei ausschwenkbare Halteklammern 5, die jeweils über eine Spannschraube 6 in axialer Richtung verstellbar sind. Die Spannschrauben 6 befinden sich innerhalb der rohrförmigen Befestigungsvorrichtung 1 und die Halteklammern 5 ragen im ausgeschwenkten Zustand durch schlitzförmige Öffnungen 7 aus dem Rohrabschnitt 2 nach außen. In der in den Figuren 1 und 2 gezeigten Montagestellung sind die Halteklammern in entsprechende Ausnehmung 8 nach innen verschwenkt, sodass sie sich innerhalb des Umfangs des Rohrabschnitts 2 befinden. Alternativ können die Halteklammern in der Montagestellung auch unterhalb des Rohrabschnittes 2 in gedachter Verlängerung innerhalb dessen Umfanges angeordnet sein.

Im Ausführungsbeispiel erfolgt die Schwenkbewegung der Halteklammern in einer radialen Ebene. Es wäre jedoch genauso möglich und im Rahmen der vorliegenden Erfindung umfasst, dass die Halteklammern 5 bei Betätigung der Spannschrauben in einer Kippbewegung aus einer vertikalen in eine horizontale Richtung ausklappen. Das Ausschwenken der Halteklammern 5, welches im genannten Sinne auch ein Ausklappen sein kann, kann wie im Ausführungsbeispiel aufgrund von Reibungskräften im Gewinde der Spannschrauben 6 erfolgen. Genauso wäre es jedoch möglich, Federn vorzusehen, welche eine Kraft in Ausschwenkrichtung auf die Halteklammern 5 ausüben, oder eine keilförmig verlaufende Führung an dem Rohrabschnitt 2 bzw. den Ausnehmungen 8 vorzusehen, so dass das Ausschwenken der Halteklammern 5 aufgrund von Keilwirkung bei der axialen Verstellung durch die Spannschrauben 6 erfolgt.

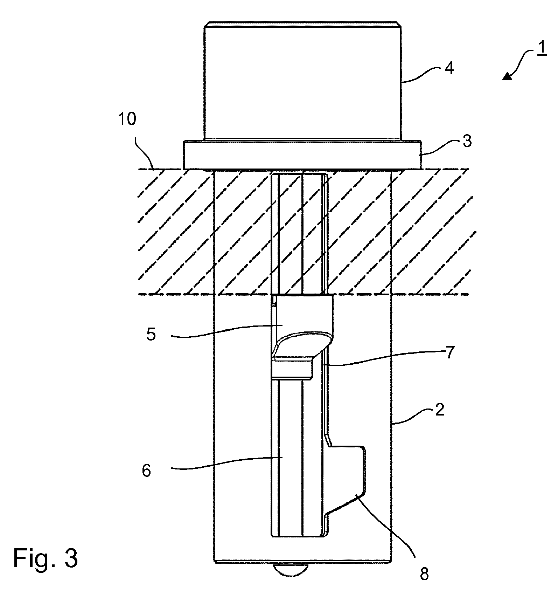

Zur Montage kann der Rohrabschnitt 2 mit den in Montagestellung eingeschwenkten Halteklammern 5 durch einen Hahnloch eines Armaturenträgers 10, wie etwa einer Spüle, einer Arbeitsplatte oder eines Waschtisches, gesteckt werden. Der Kragen 3 weist an einer Seite einen geraden Abschnitt 9 auf, der als Ausrichtmarke dient und eine Ausrichtung der Befestigungsvorrichtung 1 gegenüber dem Armaturenträger ermöglicht. Anschließend werden von der Oberseite die Spannschrauben 6 angezogen. Dabei schwenken zunächst aufgrund von Friktion im Innengewinde die Halteklammern 5 nach außen, bis sie am Rand der schlitzförmigen Öffnung 7 einen Anschlag finden. Die ausgeschwenkte Stellung der Halteklammern 5 wird hier auch als Haltestellung bezeichnet, da in dieser Stellung die Befestigungsvorrichtung 1 mittels der Halteklammern 5 und deren Spannschrauben 6 gegen den Armaturenträger 10 gehalten werden kann. Durch weitere Betätigung der Spannschrauben 6 werden die Halteklammern 5 nun nach oben in Richtung des Kragens 3 verstellt, bis sie in Anlage zur Unterseite des Armaturenträgers kommen. Die Halteklammern 5 fixieren somit über die Spannschrauben 6 den Kragen 3 der Befestigungsvorrichtung gegen die Armaturenträger 10. Diese Position ist in Figur 3 gezeigt.

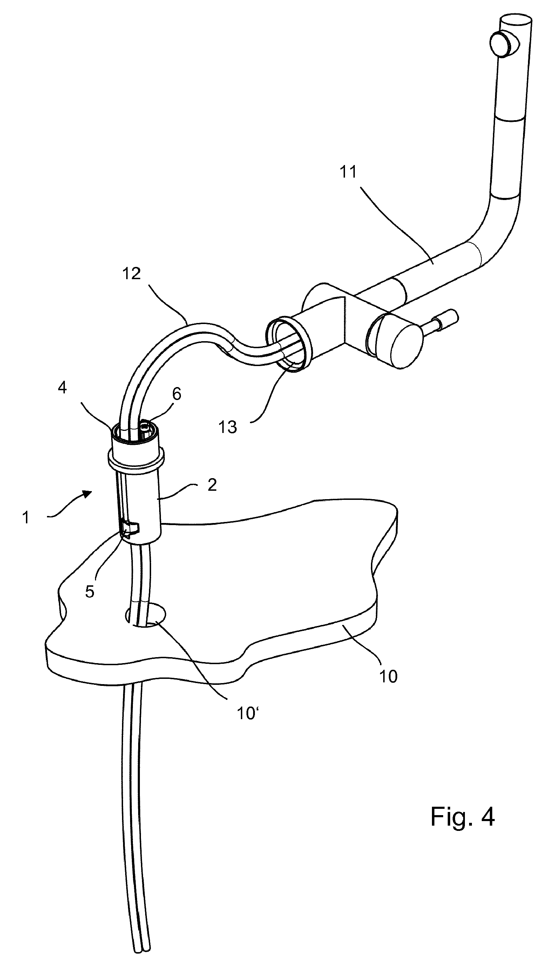

Gemäß der vorliegenden Erfindung wird jedoch die Befestigungsvorrichtung 1 vorzugsweise nicht separat von der Armatur im Hahnloch installiert, sondern die Armatur wird im vormontierten Zustand, also mit bereits angeschlossenen und durch die Befestigungsvorrichtung 1 geführten Anschlussleitungen montiert. Ein Ausführungsbeispiel einer solchen vormontierten Armatur in einer Montagesituation ist in Figur 4 gezeigt. Die Armatur weist neben der Befestigungsvorrichtung 1 ein Armaturengehäuse 11 mit daran angeschlossenen Anschlussleitungen 12 auf. Die Anschlussleitungen 12 sind durch die rohrförmige Befestigungsvorrichtung 1 hindurchgeführt. Am vom Armaturengehäuse 11 abgewandten Ende der Anschlussleitungen 12 sind herkömmliche Anschlussmuffen mit Überwurfmuttern zum Anschluss an Eckventile üblicher Bauart vorgesehen, die in den Zeichnungen jedoch nicht gezeigt sind. An seinem unteren Ende weist das Armaturengehäuse eine Buchse 13 auf, die zur Aufnahme des ringförmigen Bundes 4 der Befestigungsvorrichtung 1 ausgebildet ist. Aufnahmebuchse 13 und Bund 4 bilden eine Passung, die so bemaßt ist, dass die Teile spielfrei von Hand ineinandergefügt werden können.

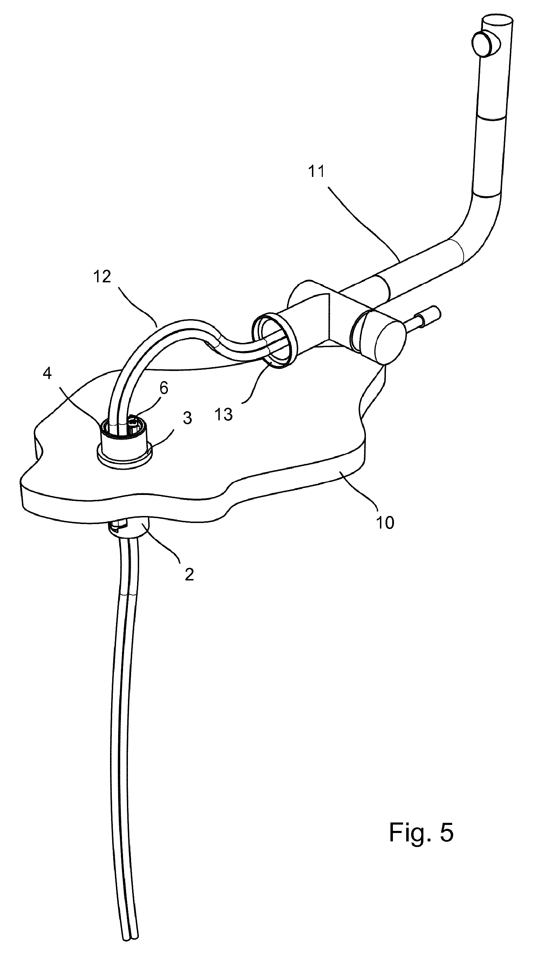

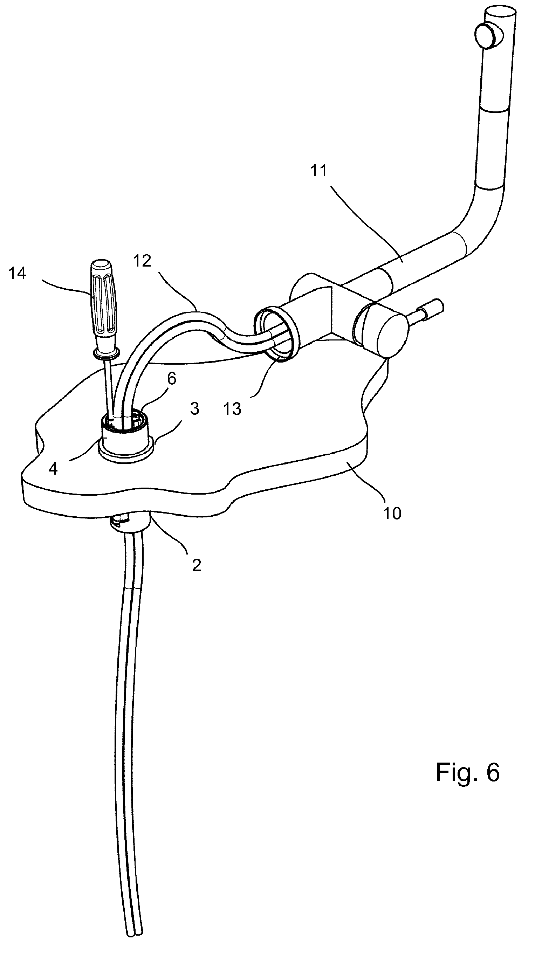

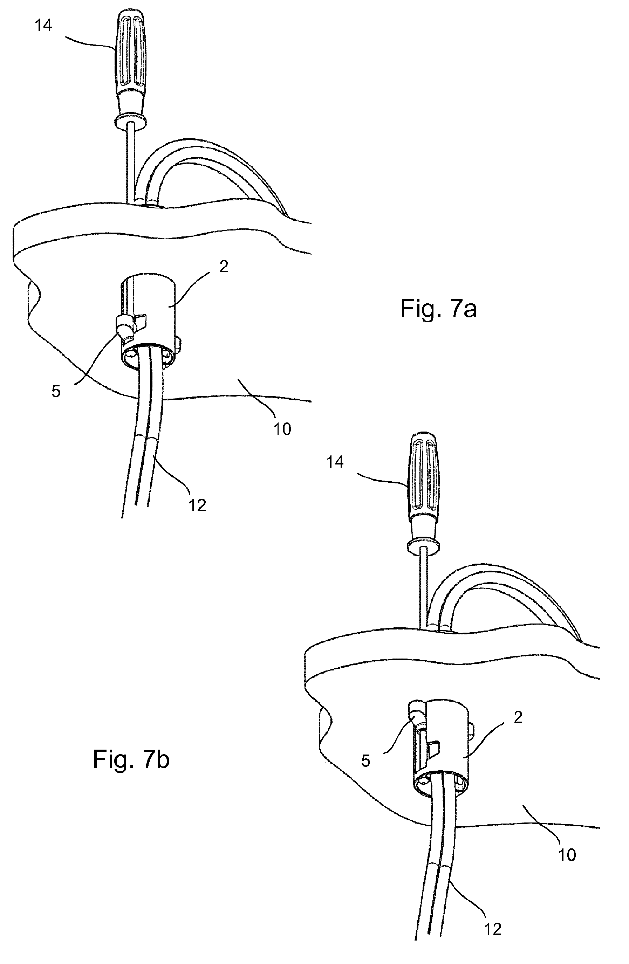

Zur Montage wird die Befestigungsvorrichtung 1 wie in Figur 4 gezeigt von dem Armaturengehäuse 11 abgenommen und in das Hahnloch 10' des Armaturenträgers 10 eingesetzt. Dieser Zustand ist in Figur 5 gezeigt. Anschließend werden mit einem Schraubwerkzeug 14, wie in Figur 6 gezeigt, beispielsweise ein Schraubenzieher oder ein Akkuschrauber, die Spannschrauben angezogen und damit die Halteklammern 5 zunächst ausgeschwenkt und dann gegen die Unterseite des Armaturenträgers 10 verspannt. Figur 7a zeigt in einer Ansicht von schräg unten das Ausschwenken der vorderen Halteklammer 5. Durch weitere Betätigung der zugehörigen Spannschraube wird die Halteklammer 5 in die in Figur 7b gezeigte Position an der Unterseite des Armaturenträgers 10 verstellt und gegen diesen verspannt.

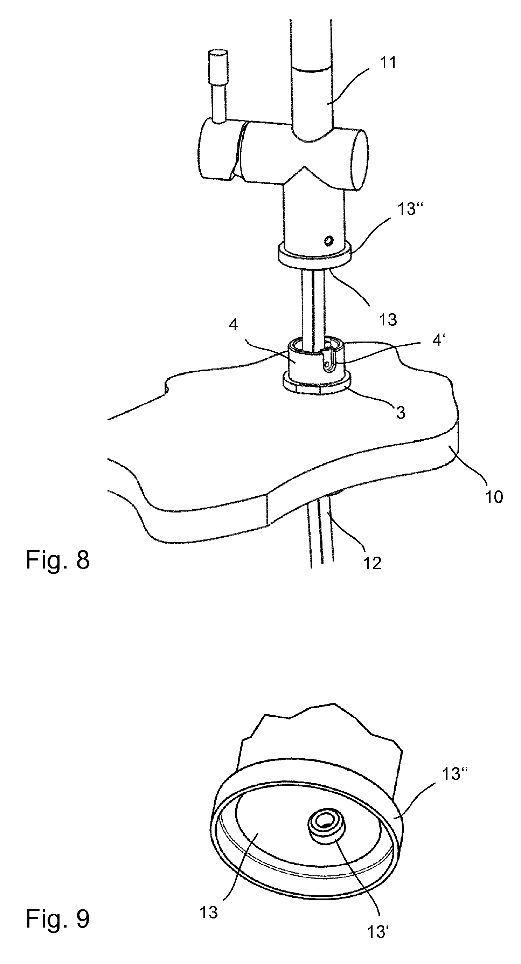

Auf die mithilfe der Spannschrauben und zugehörigen Halteklammern in dem Hahnloch 10' des Armaturenträgers 10 verankerte Befestigungsvorrichtung 1 wird nun das Armaturengehäuse 11 aufgesteckt. Die Steckverbindung zwischen dem Abschlussbund 4 der Befestigungsvorrichtung und der Buchse 13 des Armaturengehäuses ist drehfest ausgebildet. Hierzu ist in dem Bund 4 der Befestigungsvorrichtung eine Nut 4' vorgesehen, die in Richtung der axialen Erstreckung der rohrförmigen Befestigungsvorrichtung 1 verläuft. Ein Vorsprung 13' auf der Innenseite der Aufnahmebuchse 13 des Armaturengehäuses 11 greift in die Nut 4' ein und verhindert so ein Verdrehen des Armaturengehäuses 11 auf dem Bund 4. Der Vorsprung 13' weist eine radial verlaufende Gewindebohrung auf, in die zur Sicherung des Armaturengehäuses eine Madenschraube, wie in Figur 8 gezeigt, eingeschraubt wird. Ein Querschnitt durch Armaturengehäuse 11 und Bund 4 auf Höhe der Sicherungsschraube ist in Figur 9 gezeigt. Durch die axial verlaufende Bohrungen 6' werden die Spannschrauben 6 geführt. Im hohlen Innenraum der Befestigungsvorrichtung 1 verlaufen die Anschlussleitungen 11.

Der untere Abschluss des Armaturengehäuses 11 wird durch einen radialen Vorsprung 13" mit vergrößertem Innendurchmesser gebildet, der als Abdeckung in der Art einer Schubrosette für den Kragen 3 der Befestigungsvorrichtung 1 dient.

## Patentansprüche

1. Armatur mit einem Armaturengehäuse (11), einer in einem Hahnloch (10') eines Armaturenträgers (10) befestigbaren rohrförmigen Befestigungsvorrichtung (1) und einer oder mehrerer durch die rohrförmige Befestigungsvorrichtung (1) zu dem Armaturengehäuse (11) verlaufenden flexiblen Anschlussleitungen (12),
- bei dem die rohrförmige Befestigungsvorrichtung (1) einen in das Hahnloch (10') einführbaren Rohrabschnitt (2), einen auf den Armaturenträger (10) auflegbaren Kragen (3) sowie einen über den Kragen (3) hinausweisen ringförmigen Bund (4) aufweist, auf dem das Armaturengehäuse (11) befestigbar ist,
- bei dem seitlich an dem Rohrabschnitt (2) mindestens zwei ausschwenkbare, längsverstellbare Halteklammern (5) angeordnet sind, die über innerhalb der rohrförmigen Befestigungsvorrichtung (1) verlaufene Spannschrauben (6) gegen die Unterseite des Armaturenträgers (10) verstellbar sind, wobei die Spannschrauben (6) von der Armaturenseite der Befestigungsvorrichtung (1) betätigbar sind,
**dadurch gekennzeichnet, dass**
das Armaturengehäuse (11) befestigungsseitig eine Aufnahmebuchse (13) zur passgenauen, drehfesten Aufnahme des ringförmigen Bundes (4) der rohrförmigen Befestigungsvorrichtung (1) aufweist, und dass die Armatur im vormontierten Zustand auf dem Armaturenträger (10) montierbar ist, indem das Armaturengehäuse (11) mit den daran angeschlossenen und durch die rohrförmige Befestigungsvorrichtung (1) geführten Anschlussleitungen (12) von der in das Hahnloch (10') eingeführten rohrförmigen Befestigungsvorrichtung (1) soweit abnehmbar ist, dass die Spannschrauben (6) zugänglich sind.

2. Armatur nach Anspruch 1, bei der und die Halteklammern (5) in einer Montagestellung in Aussparungen (8) der Befestigungsvorrichtung (1) aufgenommen sind, aus denen sie bei Betätigung der Spannschrauben (6) in eine Haltestellung ausschwenken

3. Armatur nach Anspruch 1 oder 2, bei der das Armaturengehäuse (11) einen Auslauf mit Auszugsbrause aufweist, die über einen durch das Armaturengehäuse (11) verlaufenden Auszugschlauch an das Armaturengehäuse angeschlossen ist, wobei der Auszugschlauch durch die rohrförmige Befestigungsvorrichtung (1) hindurch und in einer Schlaufe zurück zu einem Anschluss am Armaturengehäuse (11) verläuft.

4. Armatur nach einem der vorangehenden Ansprüche, bei der der Bund (4) der Befestigungsvorrichtung (1) eine Nut (4') und das Armaturengehäuse (11) einen innerhalb der Aufnahmebuchse (13) angeordneten, korrespondierenden Vorsprung (13') aufweist.

5. Armatur nach einem der vorangehenden Ansprüche, bei der das Armaturengehäuse (11) im Bereich seiner Aufnahmebuchse (13) eine Sicherungsschraube zur Festlegung des auf den Bund (4) aufgesteckten Armaturengehäuses (11) aufweist.

6. Armatur nach Anspruch 4 und 5, bei der die Sicherungsschraube durch den Vorsprung (13') verläuft.

7. Armatur nach einem der vorangehenden Ansprüche, bei der Aufnahmebuchse (13) und Bund (4) derart zusammenwirkend ausgebildet sind, dass das Armaturengehäuse (11) in einer rein axialen Richtung in Bezug auf die rohrförmige Befestigungsvorrichtung (1) auf den Bund (4) aufsteckbar ist.

8. Armatur nach einem der vorangehenden Ansprüche, bei dem der Kragen (3) an einer Seite einen gerade ausgeformten Randbereich (9) zur optischen Ausrichtung der Befestigungsvorrichtung (1) gegenüber dem Rand einer als Armaturenträger (10) dienenden Spüle aufweist.

9. Armatur nach einem der vorangehenden Ansprüche, bei der das Armaturengehäuse (1) ein Mischventil aufweist und die Anschlussleitungen (12) eine Warmwasser- und eine Kaltwasserleitung umfassen.
